# EUROPEAN PATENT SPECIFICATION

(11) **EP 2 033 901 B1**
(45) Date of publication and mention of the grant of the patent: **27.10.2010**
(21) Application number: 08015816.5
(22) Date of filing: 09.09.2008
(51) Int. Cl.: B65D 5/74, B65D 5/36, B65D 33/02, B65D 75/00

(54) **Collapsible and disposable container**
Zusammenklappbarer Einwegbehälter
Conteneur démontable et jetable

(30) Priority: 10.09.2007 TW 96133698
(43) Date of publication of application: 11.03.2009
(73) Proprietor: Lai, Teng-Shun, Jhongshan District, Taipei (TW); Huang, Shun-Wei, Jhongshan District, Taipei (TW)
(72) Inventor: Lai, Teng-Shun, Jhongshan District Taipei (TW)
(74) Representative: Schildberg, Peter

(56) References cited:
- EP-A- 0 857 659
- DE-U1- 8 500 532
- PT-A- 102 805
- US-A1- 2002 094 922
- US-A1- 2006 191 929

## Description

### 1. Field of the Invention

The present invention relates to a container, and more particularly to a collapsible and disposable container for beverages or the like like the one disclosed in PT 102 805.

### 2. Description of Related Art

Tetra Pack packages is widely used containers for beverages or food. However, the Tetra Pack packages are difficult for recycling because a Tetra Pack package comprises multiple layers of aluminum films, papers and plastic films. In addition, a conventional Tetra Pack package has to be torn off before being folded for reducing spaces for recycling or reclaiming process. However, some parts of the conventional Tetra Pack package are bent and connected by glue or adhesive, to tear of the conventional package is difficult and time-consuming.

To overcome the shortcomings, the present invention tends to provide a container to mitigate or obviate the aforementioned problems.

The main objective of the invention is to provide a container that is easily collapsible. The container has a body constructed by a front panel, a rear panel, a top panel, two side panels and a bottom panel. An opening is defined in the top panel and is closed by a cap. Each one of the front, rear and top panels has a thickness larger than that of each one of the side and bottom panels. The top panel has a top folding groove defined in the top panel along a direction perpendicular to the side panels. The bottom panel has a bottom reinforced rib having a bottom folding groove defined in the bottom reinforced rib and parallel with the top folding groove in the top panel.

Other objects, advantages and novel features of the invention will become more apparent from the following detailed description when taken in conjunction with the accompanying drawings.

### IN THE DRAWINGS

Fig. 1A is a perspective view of a first embodiment of a container in accordance with the present invention;
Fig. 1B is an enlarged perspective view of a side reinforced rib of the container in Fig. 1A;
Fig. 2A is a bottom perspective view of the first embodiment of the container in Fig. 1A;
Fig. 2B is an enlarged perspective view of a bottom reinforced rib of the container in Fig. 2A;
Fig. 3 is a cross sectional top view of a side panel of the container in Fig. 1A;
Fig. 4 is a cross sectional side view of a bottom panel of the container in Fig. 1A;
Fig. 5 is operational cross sectional side views of a nozzle of the container in Fig. 1A;
Fig. 6 is an operational perspective view of the container in Fig. 1A showing that the container is folded;
Fig. 7 is a perspective view of a second embodiment of a container in accordance with the present invention; and
Fig. 8 is a bottom perspective view of the container in Fig. 7.

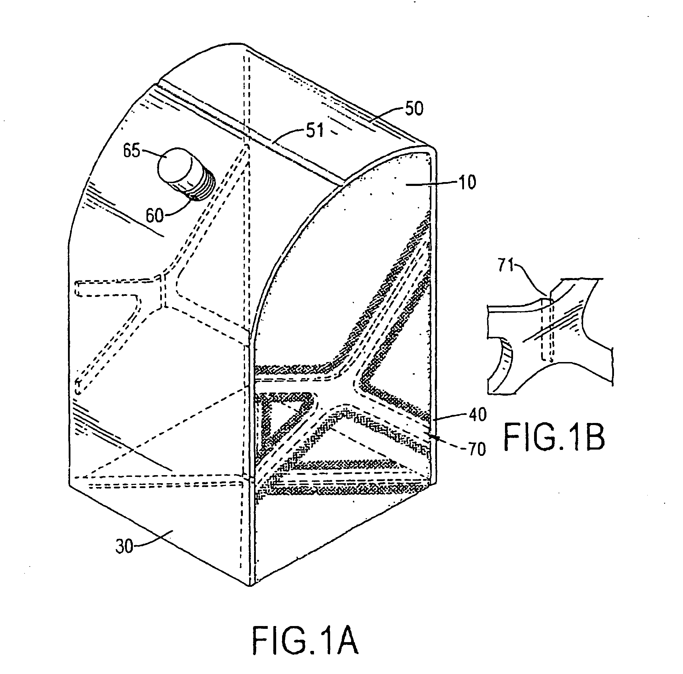

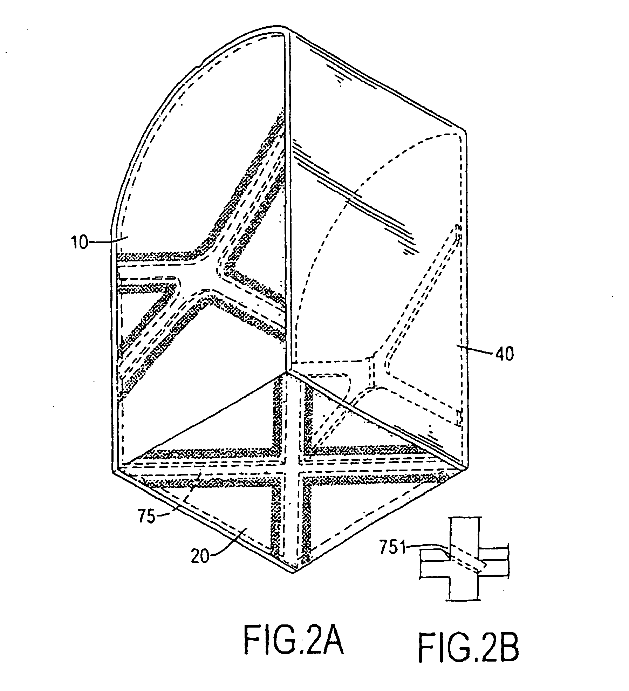

With reference to Figs. 1, 2, 7 and 8, a beverage container in accordance with the present invention comprises a body. The body is hollow is constructed by a front panel (30,30A), a rear panel (40,40A), a top panel (50,50A), two side panels (10,10A) and a bottom panel (20,20A).

The front panel (30,30A) has a top connected to one end of the top panel (50,50A), and the rear panel (40,40A) has a top connected to the other end of the top panel (50,50A). The top panel (50,50A) may be curved as shown. The side panels (10,10A) are mounted between the front, rear and the top panels (30,30A,40,40A,50,50A). The bottom panel (20,20A) is mounted between the front, rear and side panels (10,10A,30,30A,40,40A) to form a hollow body with a chamber for containing beverage, food or the like.

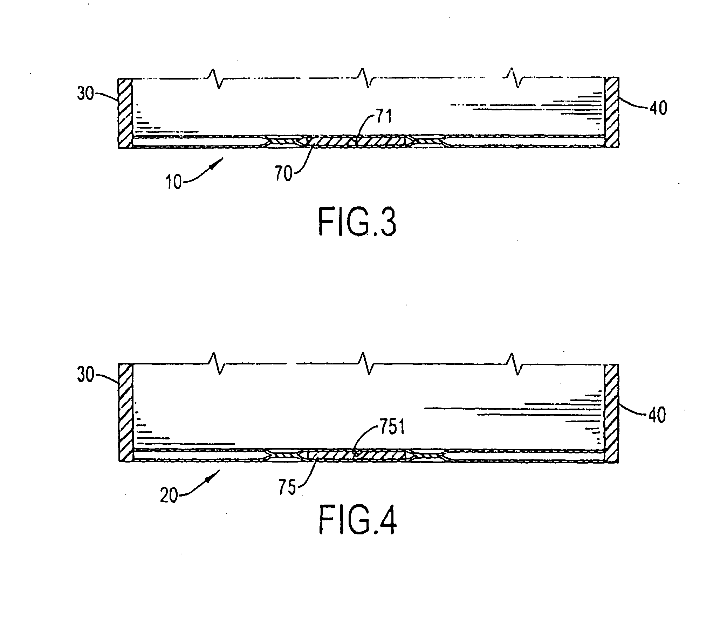

With further reference to Figs. 3 and 4, the front, rear and top panels (30,30A,40,40A,50,50A) may be made of hard plastic material and each has a thickness larger than that of each one of the side and bottom panels (10,10A,20,20A).

The top panel (50,50A) has a top folding groove (51,51A) defined in the top panel (50,50A) along a direction perpendicular to the side panels (10,10A). In a preferred embodiment, the top folding groove (51,51A) is defined in the top of the top panel (50,50A). In an alternative embodiment, the top folding groove (51,51A) can be defined in the bottom of the top panel (50,50A).

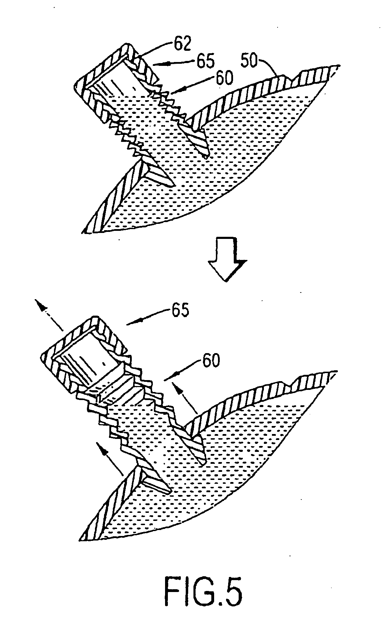

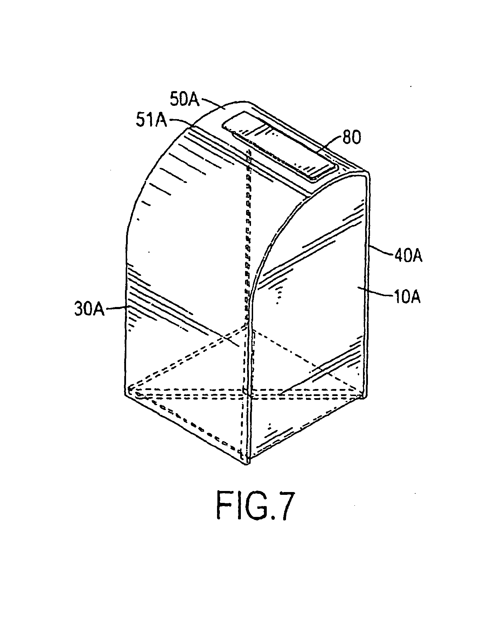

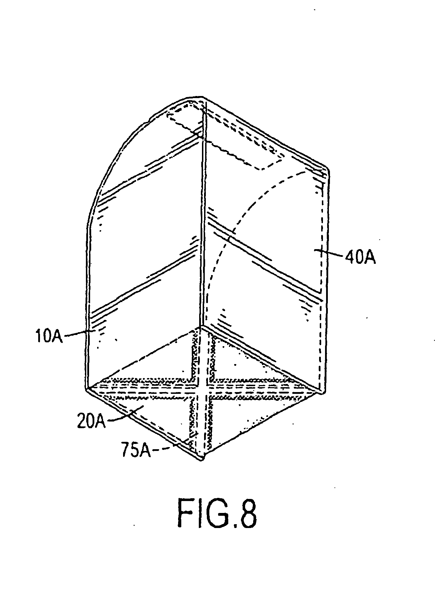

The top panel (50,50A) has an opening defined through the top panel (50,50A) and communicating with the chamber. The opening is provided with a cap (65,80) to close the opening. With reference to Fig. 5, the opening is defined through the top of the top panel (50,50A) and may be defined at a position lower than a topmost position of the curved top panel (50). In a second embodiment as shown in Figs. 7 and 8, the opening is defined the topmost position of the curved top panel (50A).

In the first embodiment, with reference to Fig. 5, a nozzle (60) is attached to the top panel (50) to close the opening in the top panel (50) and is provided with the cap (65). The nozzle (60) communicates with the chamber in the body and has an outer thread (62) formed around a free end of the nozzle (60). The cap (65) is attached to the nozzle (60) and has an inner thread screwed with the outer thread (62) on the free end of the nozzle (60). The nozzle (60) may be extendable to a position where the free end of the nozzle (60) is higher than the topmost position of the curved top panel (50). Consequently, the chamber of the body can be filled with beverage as full as possible to improve the use of the container.

In the second embodiment, the cap (80) is attached directly to the opening in the top panel (50A) to close the opening.

The bottom panel (20,20A) may be implemented by two plastic films connected with each other and has a bottom reinforced rib (75,75A). The bottom reinforced rib (75,75A) is embedded between the plastic films of the bottom panel (20,20A) and is X-shaped.

The bottom reinforced rib (75,75A) has a bottom folding groove (751) defined in the bottom reinforced rib (75,75A) and parallel with the top folding groove (51,51A) in the top panel (50,50A). In a preferred embodiment, the bottom folding groove (751) is defined in a top of the bottom reinforced rib (75,75A) on the bottom panel (20,20A). Alternatively, the bottom folding groove (751) may be defined in a top of the bottom reinforced rib (75,75A) on the bottom panel (50,50A). In addition, the bottom folding groove (751) is in alignment with the top folding groove (51,51A) and is located at a surface that is perpendicular to the side panels (10,10A) and is parallel with the front and rear panels (30,30A,40,40A).

With reference to Fig. 1 to 3, each side panel (10,10A) is implemented by two plastic films connected with each other and may further have a side reinforced rib (70). The side reinforced rib (70) of each side panel (10) is embedded in the plastic films of the side panel (10), is X-shaped and has a side folding groove (71) defined along a direction parallel with the front panel (30). In a preferable embodiment, the side folding grooves (71) in the side panels (10) are located at the surface at which the top and bottom folding grooves (51,751) are located.

With the reinforced ribs (70,75) on the side and bottom panels (10,20,20A), the structural strength of the side and bottom panels (10,20,20A) implemented by plastic films can be reinforced. Thus, the volume of beverage that the container can hold can be increased. In addition, for small volume usage, the side reinforced ribs (70) can be kept free from the side panels (10A) as the container shown in Figs. 7 and 8.

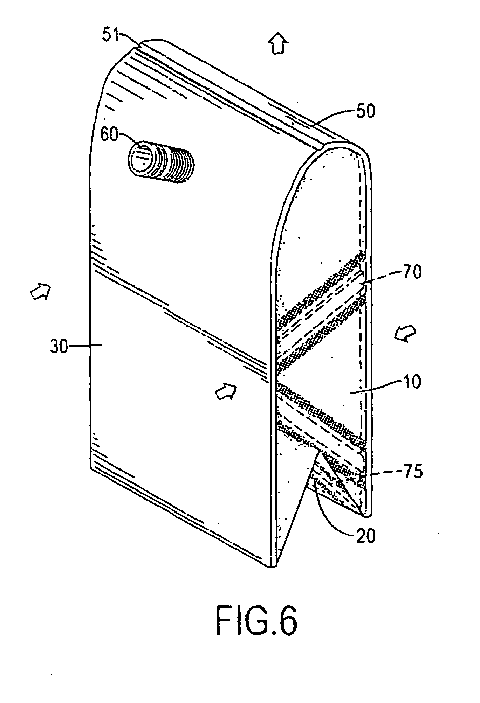

To fold the container, with reference to Figs. 1, 2 and 6, the top, side and bottom panels (10,10A,20,20A,30,30A) can be folded with the folding grooves (51,51A,71,751). Because the thickness of the side and bottom panels (10,10A,20,20A) are smaller than that of the front, top and rear panels (30,30A,40,40A,50,50A), the container can be easily collapsed to reduce the space for recycling or reclaiming the container. Furthermore, because the panels (10,10A,20,20A,30,30A,40,40A,50,50A) are formed by plastic material, the container is sorted to plastic for a recycling or reclaiming process. To recycle or reclaim the container in accordance with the present invention is easy and convenient.

## Claims

1. A container comprising:
a hollow body constructed by a front panel (30,30A), a rear panel (40,40A), a top panel (50,50A), two side panels (10,10A) and a bottom panel (20,20A); and
an opening defined in the top panel (50,50A) and being closed by a cap (65,80), and the top panel (50,50A) has a top folding groove (51,51A) defined in the top panel (50,50A) along a direction perpendicular to the side panels (10,10A); and the bottom panel (20,20A) has a bottom reinforced rib (75,75A) having a bottom folding groove (751) defined in the bottom reinforced rib (75,75A) and parallel with the top folding groove (51,51A) in the top panel (50,50A) **characterized in that**
each one of the front, rear and top panels (30,30A,40,40A,50,50A) has a thickness larger than that of each one of the side and bottom panels (10,10A,20,20A).

2. The container as claimed in claim 1, wherein the top folding groove (51,51A) is defined in a top of the top panel (50,50A);
the bottom folding groove (751) is defined in a top of the bottom reinforced rib (75,75A) on the bottom panel (20,20A); and
the bottom folding groove (751) is in alignment with the top folding groove (51,51A) and is located at a surface that is perpendicular to the side panels (10,10A) and is parallel with the front and rear panels (30,30A,40,40A).

3. The container as claimed in claim 1 or 2, wherein each side panel (10) further has a side reinforced rib (70) having a side folding groove (71) defined in the side reinforced rib (70) along a direction parallel with the front panel (30); and
the side folding grooves (71) in the side panels (10) are located at the surface at which the top and bottom folding grooves (51,751) are located.

4. The container as claimed in claim 1 or 3, wherein
the top panel (50) is curved, wherein the opening is defined at a position lower than a topmost position of the curved top panel (50);
the top panel (50) further has a nozzle (60) attached to the opening in the top panel (50), being extendable and having an outer thread (62) formed around a free end of the nozzle (60); and
the cap (65) has an inner thread screwed with the outer thread (62) on the free end of the nozzle (60).

5. The container as claimed in claim 1 or 4, wherein
the bottom panel (20,20A) is implemented by two plastic films connected with each other; and
the bottom reinforced rib (75) is embedded between the plastic films of the bottom panel (20,20A) and is X-shaped.

6. The container as claimed in claim 3 or 5, wherein
each side panel (10) is implemented by two plastic films connected with each other; and
the side reinforced rib (70) of each side panel (10) is embedded in the plastic films of the side panel (10) and is X-shaped.

## Patentansprüche

1. Behälter, umfassend:
einen Hohlkörper, der aus einem Vorderteil (30, 30A), einem Hinterteil (40, 40A), einem Oberteil (50, 50A), zwei Seitenteilen (10, 10A) und einem Unterteil (20, 20A) aufgebaut ist, und
eine Öffnung, die im Oberteil (50, 50A) definiert ist und mit einem Verschluss (65, 80) verschlossen ist, und wobei die Oberseite (50, 50A) eine obere Faltnut (51, 51A) aufweist, die in der Oberseite (50, 50A) entlang einer Richtung senkrecht zu den Seitenteilen (10, 10A) definiert ist, und
wobei das Unterteil (20, 20A) eine untere verstärkte Rippe (75, 75A) aufweist, die eine untere Faltnut (751) aufweist, die in der unteren verstärkten Rippe (75, 75A) definiert ist und parallel zur oberen Faltnut (51, 51A) in der Oberseite (50, 50A) verläuft, **dadurch gekennzeichnet, dass**
jedes Vorder-, Rück- und Oberteil (30, 30A, 40, 40A, 50, 50A) eine Dicke aufweist, die größer ist als die jedes Seiten- und Unterteils (10, 10A, 20, 20A).

2. Behälter nach Anspruch 1, wobei die obere Faltnut (51, 51A) im oberen Bereich des Oberteils (50, 50A) definiert ist,
die untere Faltnut (751) im oberen Bereich der unteren verstärkten Rippe (75, 75A) am Unterteil (20, 20A) definiert ist, und
die untere Faltnut (751) nach der oberen Faltnut (51, 51 A) ausgerichtet ist und sich in einer Fläche befindet, die senkrecht zu den Seitenteilen (10, 10A) und parallel zum Vorder- und Hinterteil (30, 30A, 40, 40A) verläuft.

3. Behälter nach Anspruch 1 oder 2, wobei jedes Seitenteil (10) weiterhin eine seitliche verstärkte Rippe (70) aufweist, die eine seitliche Faltnut (71) aufweist, die in der seitlichen verstärkten Rippe (70) entlang einer Richtung parallel zur Vorderseite (30) definiert ist, und
wobei die seitlichen Faltnute (71) in den Seitenteilen (10) in der Fläche liegen, in der sich die obere und untere Faltnut (51, 751) befinden.

4. Behälter nach Anspruch 1 oder 3, wobei
die Oberseite (50) gekrümmt ist, wobei die Öffnung an einer Stelle unterhalb der obersten Stelle der gekrümmten Oberseite (50) definiert ist,
die Oberseite (50) weiterhin einen Ausguss (60) aufweist, der an der Öffnung in der Oberseite (50) befestigt ist und ausziehbar ist und ein Außengewinde (62) aufweist, das um ein freies Ende des Ausgusses (60) herum ausgebildet ist, und
der Verschluss (65) ein Innengewinde aufweist, das am freien Ende des Ausgusses (60) mit dem Außengewinde (62) verschraubt ist.

5. Behälter nach Anspruch 1 oder 4, wobei
das Unterteil (20, 20A) mit zwei Kunststofffolien umgesetzt ist, die miteinander verbunden sind, und
die untere verstärkte Rippe (75) zwischen den Kunststofffolien des Unterteils (20, 20A) eingebettet ist und X-förmig ist.

6. Behälter nach Anspruch 3 oder 5, wobei
jedes Seitenteil (10) mit zwei Kunststofffolien umgesetzt ist, die miteinander verbunden sind, und
die seitliche verstärkte Rippe (70) jedes Seitenteils (10) in den Kunststofffolien des Seitenteils (10) eingebettet ist und X-förmig ist.

## Revendications

1. Conteneur comprenant :
un corps creux construit par un panneau avant (30, 30A), un panneau arrière (40, 40A), un panneau supérieur (50, 50A), deux panneaux latéraux (10, 10A) et un panneau inférieur (20, 20A) ; et
une ouverture définie dans le panneau supérieur (50, 50A) et qui est fermée par un capuchon (65, 80), et le panneau supérieur (50, 50A) possédant une rainure de pliage supérieure (51, 51A) définie dans le panneau supérieur (50, 50A) le long d'une direction perpendiculaire aux panneaux latéraux (10, 10A) ; et
le panneau inférieur (20, 20A) possédant une nervure renforcée inférieure (75, 75A) ayant une rainure de pliage inférieure (751) définie dans la nervure renforcée inférieure (75, 75A) et parallèle à la rainure de pliage supérieure (51, 51A) dans le panneau supérieur (50, 50A), **caractérisé en ce que**
chacun des panneaux avant, arrière et supérieur (30, 30A, 40, 40A, 50, 50A) possède une épaisseur supérieure à celle de chacun des panneaux latéraux et inférieur (10, 10A, 20, 20A).

2. Conteneur selon la revendication 1, dans lequel la rainure de pliage supérieure (51, 51A) est définie dans une partie supérieure du panneau supérieur (50, 50A) ;
la rainure de pliage inférieure (751) est définie dans une partie supérieure de la nervure renforcée inférieure (75, 75A) sur le panneau inférieur (20, 20A) ; et
la rainure de pliage inférieure (751) est alignée avec la rainure de pliage supérieure (51, 51A) et est située au niveau d'une surface qui est perpendiculaire aux panneaux latéraux (10, 10A) et est parallèle aux panneaux avant et arrière (30, 30A, 40, 40A).

3. Conteneur selon la revendication 1 ou 2, dans lequel chaque panneau latéral (10) possède en outre une nervure renforcée latérale (70) ayant une rainure de pliage latérale (71) définie dans la nervure renforcée latérale (70) le long d'une direction parallèle au panneau avant (30) ; et
les rainures de pliage latérales (71) dans les panneaux latéraux (10) sont situées au niveau de la surface sur laquelle les rainures de pliage supérieure et inférieure (51, 751) sont situées.

4. Conteneur selon la revendication 1 ou 3, dans lequel
le panneau supérieur (50) est courbe, dans lequel l'ouverture est définie en une position inférieure à une position la plus en hauteur possible du panneau supérieur courbe (50) ;
le panneau supérieur (50) possède en outre une buse (60) reliée à l'ouverture dans le panneau supérieur (50), qui peut s'étendre et ayant un filetage externe (62) formé autour d'une extrémité libre de la buse (60) ; et
le capuchon (65) a un filetage interne vissé avec le filetage externe (62) sur l'extrémité libre de la buse (60).

5. Conteneur selon la revendication 1 ou 4, dans lequel
le panneau inférieur (20, 20A) est réalisé par deux films plastiques connectés l'un à l'autre ; et
la nervure renforcée inférieure (75) est encastrée entre les films plastiques du panneau inférieur (20, 20A) et est en forme de X.

6. Conteneur selon la revendication 3 ou 5, dans lequel
chaque panneau latéral (10) est réalisé par deux films plastiques connectés l'un à l'autre ; et
la nervure renforcée latérale (70) de chaque panneau latéral (10) est encastrée dans les films plastiques du panneau latéral (10) et est en forme de X.
